# FASCICULE DE BREVET EUROPEEN

(11) **EP 1 513 908 B1**
(45) Date de publication et mention de la délivrance du brevet: **28.10.2009**
(21) Numéro de dépôt: 03756040.6
(22) Date de dépôt: 02.06.2003
(51) Int. Cl.: C09K 5/06, C09K 5/10, F16L 59/02, E21B 36/00

(54) **METHODE D ISOLATION THERMIQUE, PROCEDE DE PREPARATION D&apos ;UN GEL ISOLANT ET GEL ISOLANT OBTENU**
WÄRMEISOLATIONSVERFAHREN, VERFAHREN ZUR HERSTELLUNG EINES ISOLIERGELS UND DAS SO HERGESTELLTE ISOLIERGEL
METHOD FOR THERMAL INSULATION, METHOD FOR PREPARATION OF AN INSULATING GEL AND INSULATING GEL PRODUCED THUS

(30) Priorité: 03.06.2002 FR 0206814
(43) Date de publication de la demande: 16.03.2005
(73) Titulaire: Institut Français du Pétrole, 92852 Rueil-Malmaison Cedex (FR); SAIPEM S.A., 78180 Montigny Le Bretonneux (FR)
(72) Inventeur: PASQUIER, David, F-92150 Suresne (FR); CHOMARD, Angèle, F-75008 Paris (FR); JARRIN, Jacques, F-92000 Nanterre (FR); OZOUX, Valérie, F-58160 La Fermete (FR)
(86) Numéro de dépôt international: PCT/FR2003/001652
(87) Numéro de publication internationale: WO 2003/102105

(56) Documents cités:
- FR-A- 2 809 115
- US-A- 4 348 243
- US-A- 4 941 773
- US-A- 5 876 619
- US-A- 5 951 910
- US-A- 6 000 438

## Description

La présente invention concerne le domaine des matériaux isolants thermiquement, notamment pour l'exploitation et le transport des effluents produits par un gisement pétrolier.

Elle a pour objet une méthode d'isolation thermique caractérisée en ce qu'elle comprend la mise en place d'un gel formé entre une base liquide isolante, à changement de phase ou non, et au moins un agent gélifiant comprenant au moins un polysiloxane, modifié ou non, et la réticulation *in situ* de l'agent gélifiant, éventuellement en présence d'au moins un agent compatibilisant. Par "*in situ",* on entend dans la présente description que les conditions de formation du gel (réticulation) sont appliquées après que la formulation qui donnera naissance audit gel a été mise en place dans l'espace où le gel doit exercer son effet isolant.

L'invention a également pour objet les formulations réticulables utilisables dans cette méthode d'isolation, le procédé de préparation des gels isolants par réticulation de ces formulations et les gels obtenus.

La méthode d'isolation thermique selon l'invention peut s'appliquer dans de nombreux domaines, notamment pour l'isolation thermique de conduites ou pipelines ou de points singuliers, tels qu'un coude, un té, une vanne ou un connecteur automatique, dans lesquels circulent des fluides susceptibles de changements d'état importants sous l'influence de la température : cristallisation de paraffines, dépôts d'hydrates, glaces, etc.

C'est le cas notamment dans le domaine de la production d'hydrocarbures. L'isolation thermique des conduites sous-marines s'avère dans de nombreux cas nécessaire pour maintenir les fluides en écoulement et pour éviter le plus longtemps possible la formation d'hydrates ou de dépôts riches en paraffines ou en asphaltènes. Une isolation thermique performante permet de maintenir le fluide en écoulement sur toute la longueur de la ligne.

Les liquides organiques sont des composés de choix pour l'isolation thermique en raison de leur faible conductivité thermique et peuvent en outre posséder des propriétés de changement de phase. Néanmoins, des phénomènes de convection interviennent, provoquant une augmentation de la perte thermique. Aussi la gélification de ces liquides permet-elle d'assurer une faible conductivité thermique (les gels sont composés en grand majorité de liquide), tout en limitant, voire en supprimant la convection grâce à la gélification.

En cas d'arrêt de production, l'utilisation de gels isolants à changement de phase permet en outre d'augmenter le temps d'arrêt sans risquer le colmatage des conduites par refroidissement prématuré de leur contenu. Les matériaux à changement de phase (PCM, de l'anglais "Phase Change Material") se comportent comme des accumulateurs de chaleur. Ils restituent cette énergie au cours de leur solidification (cristallisation) ou absorbent cette énergie au cours de leur fusion et ce, de manière réversible.

Dans le cas des isolants avec ou sans changement de phase, différentes techniques de calorifugeage ont été décrites, par exemple dans les documents suivants : demande FR-A-2 809 115, demande JP-A-02/176 299 (brevet JP-B-91/068 275) et demande internationale WO-A-97/47 174.

Le calorifugeage peut être effectué par différents procédés. A terre ou en faible immersion, on utilise des matériaux solides poreux cellulaire ou laineux bloquant la convection de gaz à faible conductivité thermique. La compressibilité de ces matériaux poreux interdit d'utiliser cette technique à profondeur relativement élevée.

Il existe d'autres solutions qui conviennent mieux pour des utilisations à des profondeurs d'immersion élevées. On peut utiliser par exemple :
- des revêtements en matériaux polymères massifs quasi-incompressibles à base de polyuréthane, polyéthylène, polypropylène, etc., qui cependant présentent une résistivité thermique assez moyenne, insuffisante pour éviter les inconvénients en cas d'arrêts de production ;
- des revêtements en matériaux syntactiques constitués de billes creuses contenant un gaz et résistantes à la pression extérieure, noyées dans des liants tels que du béton, une résine époxy, etc., et dont la conductivité est plus faible que celle des matériaux compacts, mais qui sont nettement plus coûteux. Ces matériaux peuvent présenter des risques de dégradation sous l'action simultanée de la température et de la pression hydrostatique lorsque ces paramètres sont élevés;

On peut également protéger la conduite dans laquelle circulent les fluides par une enveloppe extérieure résistant à la pression hydrostatique. Dans l'espace annulaire ainsi formé, on interpose par exemple un calorifuge à faible conductivité thermique laissé à la pression atmosphérique ou mis sous vide avec des cloisonnements placés à intervalles réguliers pour des raisons de sécurité.

Des glycols gélifiés par des polysaccharides (commercialisés sous le nom BIOZAN®) peuvent être employés dans l'isolation thermique des transports de fluides et des pipelines (brevets US-A-5 290 768 et US-A-5 876 619). La formation d'un réseau se fait alors par interaction électrostatique des groupements carboxyliques latéraux des polysaccharides avec les cations multivalents présents dans le milieu, avec ajout d'un complexant pour contrôler la quantité d'ions. Si la concentration en cations multivalents augmente au sein du gel (par exemple, du fait de la corrosion des parois métalliques) au-delà de la concentration en complexant, le gel se rétracte. Intervient alors une macrosinérèse (macroséparation de phase) et la base isolante (ici le glycol) est en partie expulsée. Le blocage de la convection n'est plus assuré.

D'autres gels à base de polyols (polyéthylène glycol, polypropylène glycol ou glycérine) trouvent une application dans l'isolation thermique en diminuant le flux de convection, comme décrit par exemple dans le brevet US-A-5 951 910. Dans ce document, l'agent gélifiant est une cellulose bactérienne réticulée consistant en un réseau tridimensionnel de fibres interconnectées, insolubles dans l'eau. Des additifs sont éventuellement employés, notamment un co-agent tel qu'un polymère cellulosique soluble dans l'eau qui interagit avec la surface de la cellulose. Il évite la floculation en agissant comme un dispersant (par exemple la carboxyméthylcellulose CMC). De même, des inhibiteurs de corrosion ou des chélatants de métaux sont facultativement employés. Dans ce cas, la solubilité dans l'eau du polymère cellulosique constitue un risque pour une application "offshore".

Les gels chimiques possèdent *a priori* une meilleure tenue en température. Un gel à base de kérosène, dont le produit gélifiant est le KEN PAK® de Imco Service (c'est le produit de la condensation d'un polyol avec un monoaldéhyde aromatique), est utilisé pour l'isolation thermique des pipelines de types "bundles sous-marins" (US-A-4 941 773). Ce gel est difficile à mettre en oeuvre du fait de sa forte viscosité et produit de l'eau lors de la réaction de gélification.

On constate que, parmi les solutions existantes de gels isolants, à changement de phase ou non, la mise en oeuvre est délicate et/ou la durée de vie à long terme est limitée :
- soit par des phénomènes de décantation (cas des suspensions de particules) ;
- soit par des phénomènes de saturation des agents stabilisants (agents complexant d'ions dans le cas des gels de polysaccharides) ;
- soit en raison d'une certaine solubilité dans l'eau du gélifiant ;
- soit par des problèmes de compatibilité entre la base isolante et le gélifiant ;
- soit en raison d'une forte sensibilité à l'oxydation.

La température est également un paramètre limitant des solutions existantes.

On a maintenant découvert une nouvelle méthode d'isolation thermique par mise en place d'un gel chimique, utilisant une base liquide isolante organique et, comme agent gélifiant, au moins un polysiloxane.

L'avantage d'un tel agent gélifiant est qu'il possède un squelette polysiloxane lui conférant une tenue thermique très élevée. Ses propriétés et celles du gel obtenu sont stables dans une large gamme de température et, en l'absence d'oxygène, la dégradation n'intervient qu'à partir de 350 °C. De plus, il est possible d'adapter son paramètre de solubilité par une fonctionnalisation adéquate des polysiloxanes et d'optimiser ainsi la compatibilité chimique entre la base isolante et cet agent gélifiant. L'obtention d'une forte affinité réduit fortement les risques de démixtion (macrosinérèse) à long terme. De plus, il ne s'oxyde pas. Enfin, la présence d'ions métalliques, d'eau ou de molécules biologiques ne modifie en rien les propriétés du gel isolant obtenu.

D'autres caractéristiques et avantages du procédé et du matériau isolant de l'invention, ainsi que des exemples d'application seront décrits ci-après.

L'invention a donc pour premier objet une méthode d'isolation thermique qui peut être définie comme comprenant la mise en place d'un mélange formé entre un constituant liquide isolant, ou "base", à changement de phase ou non, et au moins un agent gélifiant comprenant au moins une résine polysiloxane, modifié ou non, suivie de la réticulation *in situ* de ladite résine polysiloxane.

La base liquide isolante, qui constitue la phase continue, peut être à changement de phase ou non. D'une manière générale, elle consiste en un liquide organique, préférentiellement apolaire pour accroître sa capacité d'isolation. Parmi les nombreuses bases liquides utilisables, on peut citer :
- les bases hydrocarbonées aliphatiques, cycliques ou non, insaturées ou non ;
- les bases hydrocarbonées aromatiques : benzène, xylène, mésitylène, etc. ;
- les mélanges de fractions aliphatiques et aromatiques : coupes pétrolières telles que coupes paraffiniques, kérosènes, gazoles, etc ;
- les alcools aliphatiques ou aromatiques ;
- les acides gras et les huiles végétales (par exemple huile de palme, de colza, etc.) ou animales ; et
- les composés halogénés.

Toute composition liquide isolante ayant une faible conductivité thermique et un point d'ébullition supérieur à la température de travail peut convenir. Une faible tension de vapeur saturante est un atout pour cette application.

Plus particulièrement, la base isolante est à changement de phase (PCM). Comme exemples non limitatifs de matériaux à changement de phase, on peut citer les composés chimiques de la famille des alcanes CₙH₂ₙ₊₂, tels que par exemple des paraffines (par exemple de C₁₂ à C₆₀), qui présentent un bon compromis entre les propriétés thermiques et thermodynamiques (température de fusion, chaleur latente de fusion, conductivité thermique, capacité calorifique) et le coût. Ces composés sont stables thermiquement dans la gamme des températures d'utilisation envisagées et ils sont compatibles avec une utilisation en milieu marin du fait de leur insolubilité dans l'eau et de leur très faible niveau de toxicité. Ils sont donc bien adaptés à l'isolation thermique des conduites pour grands fonds.

La température de changement d'état de ces matériaux à changement de phase est liée au nombre de carbone de la chaîne hydrocarbonée. On peut donc adapter cette température à une application particulière en choisissant les chaînes hydrocarbonées. Dans le cas de ces matériaux à changement de phase, outre ces critères, une température de changement d'état comprise entre 15 °C et 35 °C sera préférentiellement recherchée. Pour obtenir un changement de phase autour de 25 °C, on pourra par exemple utiliser un mélange de paraffines majoritaire en C₁₈, tel que le LINPAR 18-20®, commercialisé par la société CONDEA Augusta S.p.A.

On peut encore considérer dans l'invention l'utilisation de cires de n-paraffines ou d'isoparaffines à chaîne longue (C₃₀ à C₄₀) très faiblement ramifiées (1 ou 2 ramifications), d'alkylcycloalcanes ou d'alkylaromatiques à chaîne alkyle longue faiblement ramifiée, d'alcools gras ou d'acides gras. De même, des mélanges des produits précités conviennent pour l'application.

Les résines silicones (ou polysiloxanes) utilisées dans la composition de l'agent gélifiant de la méthode de l'invention sont de préférence :
- les monomères comprenant un motif de formule (I) et terminés par deux motifs de formule (II) ;
- les oligomères comprenant des motifs unitaires de formule (I) et terminés par des motifs de formule (II) ;
- les polymères comprenant des motifs unitaires de formule (I) et terminés par des motifs de formule (II) ;
- les oligomères cycliques comprenant des motifs unitaires de formule (I) ;
- et les polymères cycliques comprenant des motifs unitaires de formule (I),
les formules (I) et (II) étant représentées ci-dessous : 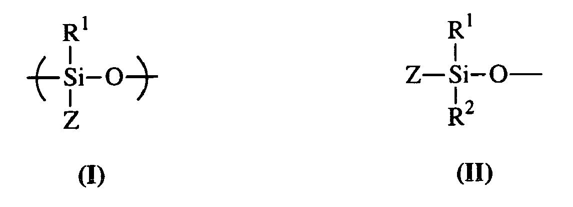 Dans ces formules :
- les symboles R¹ et R² sont semblables ou différents et représentent chacun :
   ■ un radical alkyle linéaire ou ramifié contenant moins de 30 atomes de carbone, éventuellement substitué par au moins un halogène, les radicaux alkyle étant de préférence méthyle, éthyle, propyle ou octyle ;
   ■ un radical cycloalkyle, contenant de 5 à 8 atomes de carbone dans le cycle, éventuellement substitué ;
   ■ un radical aryle contenant entre 6 et 12 atomes de carbone pouvant être substitué, de préférence un radical phényle ou dichlorophényle ; ou
   ■ toute autre chaîne alkylaromatique ;
- les symboles Z sont semblables ou différents et représentent chacun :
   ■ un groupement R¹ et/ou R² ;
   ■ un radical hydrogène ;
   ■ un radical hydroxyle ;
   ■ un radical vinyle (-CH=CH₂) ; ou
   ■ une chaîne carbonée aliphatique ou cyclique, saturée ou insaturée comportant ou non des insaturations, comportant ou non un ou plusieurs hétéroatomes, comportant ou non des groupements chimiques réactifs (tels que amine, acide carboxylique, aldéhyde, alcools, éther, époxy, oxétane, alcényléther, thiol ou thioéther) ;
avec l'un au moins des symboles Z représentant un groupement réticulable qui peut varier selon le mode de réticulation retenu parmi les modes envisagés ci-dessous.

Dans le mélange utilisé dans la méthode d'isolation de l'invention, la base liquide isolante représente en général de 50 % à 99,5 % de la masse totale du mélange et l'agent gélifiant de 50 % à 0,5 %.

Dans certains cas, il peut être nécessaire d'introduire dans le mélange à mettre en place un agent compatibilisant. Celui-ci consiste en général :
- soit en une molécule ou une macromolécule jouant le rôle d'un tensioactif entre l'agent gélifiant polysiloxane et la base liquide isolante ; il peut s'agir d'un copolymère dibloc polydiméthylsiloxane-polyéthylène (PDMS-PE) ou tribloc PE-PDMS-PE ;
- soit en une molécule de même nature que la base liquide isolante et susceptible d'être greffée sur les polysiloxanes lors de la réticulation. Dans ce cas, l'agent compatibilisant fait partie intégrante de l'agent gélifiant (polysiloxanes), car les polysiloxanes sont modifiés par celui-ci.

Selon la nature de la résine polysiloxane utilisée, la réticulation de l'agent gélifiant, effectuée au sein du mélange formé avec la base isolante liquide et mettant éventuellement en jeu l'agent compatibilisant, peut se faire selon différents modes, décrits ci-après.

Selon un premier mode, les polysiloxanes peuvent être réticulés directement en utilisant la condensation des liaisons Si-H sur les fonctions silanols (Si-OH) en présence d'un catalyseur métallique (par exemple à base de platine ou d'un carboxylate d'étain). La réaction peut être représentée par l'équation suivante :

R₃Si-H + HO-SiR'₃ → R₃SiOSiR'₃ + H₂.

Dans ce cas, le polyorganosiloxane entrant dans la composition de l'agent gélifiant doit comporter des motifs répondant aux formules (I) et/ou (II) ci-dessus dans lesquelles plusieurs symboles Z représentent le radical hydroxyle.

Selon un deuxième mode, en général, on réticule des polyorganosiloxanes terminés par des fonctions hydroxyles au moyen d'un silane comportant des fonctions alkoxy ou des groupes carboxylates. Cette réaction nécessite l'ajout d'un catalyseur acide (comme l'acide acétique ou trichloroacétique), basique (triéthylamine) ou à base d'étain ou de titane. Cette réaction nécessite également l'intervention de traces d'eau, qui servent de co-catalyseur. Ce procédé est très utilisé pour la fabrication de joints silicones. Dans ce cas, le polyorganosiloxane entrant dans la composition de l'agent gélifiant doit comporter des motifs répondant aux formules (I) et/ou (II) ci-dessus dans lesquelles plusieurs symboles Z représentent le radical hydroxyle.

Selon un troisième mode, on réalise la réticulation par addition. On utilise alors généralement un système à deux constituants :
- une résine polysiloxane comportant des fonctions vinyliques (Si-CH=CH₂) à laquelle est généralement mélangé un catalyseur, par exemple au platine,
- et une autre résine polysiloxane contenant des fonctions Si-H.

La réaction est rapide. La température de réaction peut varier de 20 °C à 150 °C. La distance entre noeuds de réticulation est définie par la distance entre groupes réactifs (Si-H et Si-CH=CH₂) dans chaque résine. Le principal avantage de ce procédé réside dans l'absence de sous-produits de réaction. Dans ce cas, les deux polyorganosiloxanes entrant dans la composition de l'agent gélifiant doivent comporter des motifs répondant aux formules (I) et/ou (II) ci-dessus dans lesquelles plusieurs symboles Z représentent respectivement le radical hydrogène et le radical vinyle. Un catalyseur d'hydrosilylation entre en général dans la formulation.

Selon un quatrième mode, on réalise une réticulation à haute température amorcée par des espèces radicalaires. Des peroxydes, comme le peroxyde de benzoyle ou le peroxyde de t-butyle fournissent ces radicaux. La température de réticulation dépend de l'énergie de dissociation de la liaison peroxyde de l'amorceur choisi. Les groupes vinyles sont plus réactifs vis-à-vis des radicaux que les alcanes. Dans ce cas, le polyorganosiloxane entrant dans la composition de l'agent gélifiant pourra comporter des motifs répondant aux formules (I) et/ou (II) ci-dessus dans lesquelles plusieurs symboles Z représentent un radical vinyle. D'autres systèmes radicalaires permettent la réticulation. C'est le cas des systèmes photoamorcés qui suivent un mécanisme analogue à celui des peroxydes ; l'activation se fait alors par rayonnement UV et non thermiquement.

Selon un cinquième mode, on réalise la réticulation thermique en présence d'un amorceur ionique. Lorsque le polyorganosiloxane comporte certains motifs (I) et/ou (II) possédant des groupements Z comportant des fonctions époxy ou oxétane, il est possible de réticuler ce polymère au moyen d'un amorceur de polymérisation ionique, thermiquement activé (par exemple comme décrit dans le document FR-A-2 800 380). Le processus de réticulation/ polymérisation fait alors intervenir une ouverture ionique des cycles époxy ou oxétane.

Dans la méthode d'isolation préférée de l'invention, la réticulation est effectuée selon le troisième mode décrit ci-dessus : il s'agit de la réticulation *in situ* par hydrosilylation. Elle comprend la mise en oeuvre d'un agent de gélification constitué de deux résines polysiloxanes fonctionnalisées - l'une contenant des fonctions hydrogénosilanes (Si-H) et l'autre, des fonctions vinylsilanes (Si-vinyle) - éventuellement greffées, et réticulables par polyaddition (hydrosilylation en présence d'un catalyseur au platine).

Un avantage de ce mode de réticulation est que, contrairement aux systèmes réticulés par polycondensation, les polysiloxanes réticulés par polyaddition (hydrosilylation) ne produisent pas de volatils lors de la réticulation, ce qui assure une mise en oeuvre plus commode en milieu confiné.

De plus, la combinaison d'un tel agent gélifiant avec la base isolante, à changement de phase ou non, forme une structure gélifiée stable dans le temps et dans une large gamme de température.

La première résine, nommée A, comporte des fonctions Si-vinyle pendantes. Les motifs chimiques couramment rencontrés dans cette première résine sont : -Si(CH₃)₂O-, -Si(CH=CH₂)CH₃O-, éventuellement -Si(C₆H₅)₂O-, et éventuellement des groupements -SiCH₃R¹O-, avec R¹ étant une chaîne carbonée pouvant contenir des hétéroatomes, des cycles, des groupements aromatiques.

La seconde résine, nommée résine B, contient les fonctions Si-H, qui vont réagir avec les fonctions Si-vinyle de la première résine pour réticuler. Les motifs chimiques couramment rencontrés dans la résine B sont : -Si(CH₃)₂O-, -SiHCH₃O-, éventuellement -Si(C₆H₅)₂O-, et éventuellement -SiCH₃R¹O-, avec R¹ étant une chaîne carbonée pouvant contenir des hétéroatomes, des cycles ou des groupements aromatiques.

Pour contrôler la cinétique de réaction de la gélification, l'agent gélifiant utilisé dans ce mode de réticulation peut comprendre un catalyseur d'hydrosilylation à base de métaux de transition (tel que le platine). Il est généralement introduit dans la formulation de la résine A. Il peut s'agir par exemple de l'acide hexachloroplatinique ou du complexe Pt⁽⁰⁾-divinyltétraméthyldisiloxane ou bien encore du complexe Pt⁽⁰⁾-tétraméthyl-tétravinylcyclotétrasiloxane. La quantité de ce catalyseur d'hydrosilylation peut varier entre 1.10⁻⁸ et 1.10⁻² équivalent par rapport aux doubles liaisons présentes (provenant de la résine B et éventuellement d'un agent compatibilisant), selon la présence d'hétéroatomes présentant des doublets électroniques et selon la concentration.

On peut utiliser plus particulièrement des systèmes réticulables à température ambiante bi-composants tels que le RTV 141® de Rhodia ou le SYLGARD 182® ou le DOW-CORNING 3-4235® de la société Dow Corning, qui conviennent bien pour la méthode de l'invention. Conjointement au composant B de ces résines on peut utiliser d'autres polysiloxanes contenant des fonctions Si-H, tels que des polyhydrogénométhylsiloxanes, connus sous la désignation PHMS.

Les deux résines polysiloxanes (contenant l'une des fonctions Si-vinyle (résine A) et l'autre des fonctions Si-H (résine B)) sont réticulées en milieu dilué à une température comprise entre 20° et 150°C. Les chaînes sont étendues par la base liquide isolante, qui joue le rôle de solvant. Une grande quantité de base peut être gélifiée par l'élastomère polysiloxane formé *in situ,* c'est-à-dire en milieu dilué. Les propriétés mécaniques du gel obtenu importent peu, tant que la base liquide isolante reste dans le gel, c'est-à-dire que le phénomène de macrosinérèse (*i.e*. une démixtion) reste de faible ampleur. Le phénomène de macrosinérèse est limité lorsque la concentration en gélifiant (élastomère de polysiloxane) dans la base est supérieure à la concentration limite d'équilibre du gel. Les facteurs régissant cette concentration limite sont liés au paramètre d'interaction entre gélifiant et base qui est fonction des paramètres de solubilité des chaînes polysiloxane et de la base liquide isolante, mais également du taux de réticulation du réseau polysiloxane (et donc la distance entre noeuds).

Le rapport des quantités des deux résines est déterminé par le RHV, c'est-à-dire le rapport des quantités molaires des groupes Si-H provenant de la résine B et des groupes Si-vinyle provenant de la résine A. Le RHV optimal se situe dans l'intervalle de 0,8 à 1,4. Il est de préférence voisin de 1,2.

Ainsi par exemple, pour les systèmes RTV 141®, et SYLGARD 182®, la proportion massique de résine A et de résine B préférée est d'environ 10/1 ; pour le DOW-CORNING 3-4235®, elle est d'environ 1/1.

La concentration en agent gélifiant dans le mélange utilisé dans la méthode de l'invention dans la base liquide isolante peut varier de 0,5 % à 50 %, mais se situe préférentiellement entre 2 % et 30 % et de manière encore plus préférée de 7 % à 30 %. Elle dépend des caractéristiques de la résine polysiloxane employée.

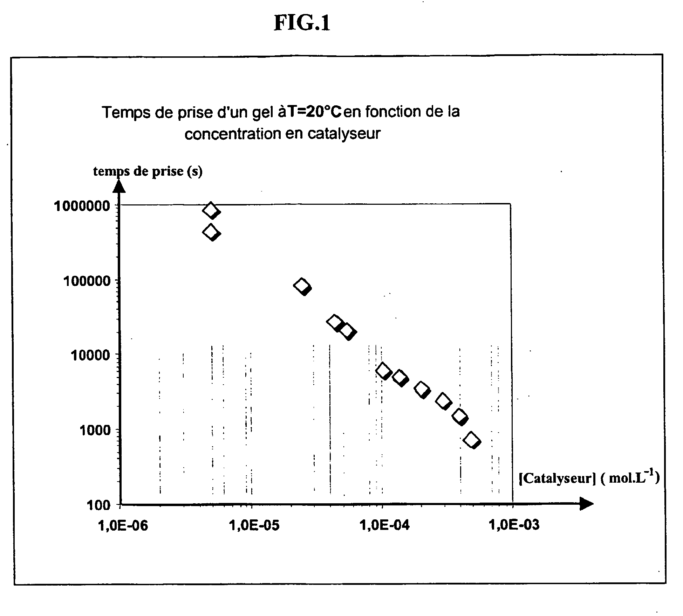

Le temps de gel est variable et dépend essentiellement de la température de mise en oeuvre, de la concentration en agent gélifiant (résines A et B) et de la concentration en catalyseur, Figure 1.

Dans le cas du mode de réticulation par hydrosilylation, tel que décrit ci-dessus, l'agent compatibilisant, lorsqu'il est mis en jeu, consiste en général en un composé vinylique très compatible avec la base isolante. Ce composé vinylique peut alors réagir lors de la réticulation, au même titre que les fonctions Si-vinyle de la résine polysiloxane, avec les Si-H de l'autre résine. On modifie ainsi *in situ* le réseau polysiloxane par le greffage par hydrosilylation de groupes compatibilisants.

On prendra alors en compte le fait que les fonctions hydrogénosilanes consommées par le greffage de l'agent compatibilisant ne peuvent plus servir à la réticulation et à la formation de noeuds. Il s'agira donc d'adapter la formulation de manière à disposer de suffisamment de fonctions hydrogénosilanes pour assurer à la fois le greffage de l'agent compatibilisant et la réticulation.

L'agent compatibilisant peut consister par exemple en un composé hydrocarboné comportant une insaturation terminale, tel que l'octadéc-1-ène, par exemple dans le cas où l'on utilise comme base liquide isolante une paraffine, ou l'allylbenzène, par exemple dans le cas où l'on utilise comme base liquide isolante une composition à caractère aromatique.

Les formulations réticulables utilisables dans la méthode d'isolation thermique de l'invention peuvent être définies par le fait qu'elles comprennent d'une manière générale le mélange d'une base liquide isolante, à changement de phase ou non, et d'au moins un agent gélifiant comprenant au moins un polysiloxane, modifié ou non.

Les bases liquides isolantes, les agents gélifiants et les éventuels agents compatibilisants utilisables dans ces formulations ont été décrits plus haut. Parmi ces formulations, on peut mentionner plus particulièrement celles dont la base liquide isolante est choisie parmi les kérosènes (aromatiques ou non) et les paraffines, par exemple de C₁₄ à C₂₀.

Dans le cas où la base liquide isolante consiste essentiellement en un kérosène, il n'est pas nécessaire de mettre en jeu d'agent compatibilisant, car le paramètre de solubilité des kérosènes est très proche de celui des polysiloxanes, qu'ils soient linéaires ou réticulés. Dans ces formulations, une concentration en agent gélifiant de 5 % à 30 % en masse suffit en général pour obtenir un gel stable, pour une teneur en base liquide isolante (kérosène de 95 % à 70 % en masse). Ces proportions sont valables pour les kérosènes qui comprennent ou non des constituants aromatiques.

Dans le cas où la base liquide isolante consiste essentiellement en une paraffine ou mélange de paraffines (par exemple une coupe paraffinique de C₁₄ à C₂₀), on met en général en jeu un agent compatibilisant, pour améliorer la stabilité du gel et éviter le relargage de la paraffine. Il s'agit par exemple d'un composé à insaturation terminale, tel que l'octadéc-1-ène. La concentration en agent gélifiant (polysiloxane), qui peut être par exemple de 7 % à 30 % en masse (pour une concentration en paraffine de 93 % à 70 %) inclut celle de l'agent compatibilisant, qui peut représenter par exemple une proportion de 10 % à 40 % en masse de la concentration totale en agent gélifiant + agent compatibilisant.

Quel que soit le mode de réticulation utilisé, pour apporter certaines propriétés spécifiques nécessaires à la mise en oeuvre du gel, on peut ajouter au mélange de la base liquide isolante et de l'agent gélifiant des composés servant d'additifs et/ou des charges adaptés à certaines applications.

On peut ainsi ajouter des additifs solubles ayant notamment les fonctions suivantes :
- des additifs antioxydants peuvent être ajoutés essentiellement lorsque le gel est soumis à une élévation de température en service. Les plus fréquemment rencontrés sont les dérivés phénoliques (dibutylparacrésol, etc.), les dérivés phénoliques contenant du soufre et les amines aromatiques (phényl α- ou β-naphtylamine ou les diphényles amines alkylées). Ces antioxydants retardent le processus d'oxydation, grâce à leur action inhibitrice de formation de radicaux libres, ou destructive vis-à-vis des hydropéroxydes formés ;
- des agents antibactériens ;
- des inhibiteurs de corrosion solubles dans la base isolante liquide. Ils sont constitués de composés chimiques qui s'adsorbent facilement sur la surface métallique en formant un film hydrophobe (amines grasses, sulfonates ou phosphonates de métaux alcalino-terreux, etc.) ;
- ou encore des agents anti-mousse ou des colorants.

On peut encore ajouter aux mélanges mis en oeuvre des charges insolubles, telles que des microbilles de verres creuses, des cendres volantes, des macrobilles, des fibres creuses, etc., pour ajuster sa densité et/ou sa conductivité thermique.

Les gels selon l'invention trouvent des applications pour l'isolation thermique en général. Ils peuvent être appliqués en particulier pour l'isolation thermique de conduites d'acheminement d'hydrocarbures, où ils sont utilisés comme revêtements directs ou interposés (injectés) entre les conduites et une enveloppe extérieure de protection, ou encore pour l'isolation thermique de points singuliers tels qu'un coude, un té, une vanne ou un connecteur automatique. Dans ce dernier cas, on intervient au fond de la mer sur une conduite déjà mise en place de manière définitive et l'on installe autour dudit point singulier une enveloppe ou un coffrage étanche à l'aide d'un robot sous-marin télécommandé (de type ROV) muni de bras manipulateurs. On crée alors un vide dans ladite enveloppe de manière à la purger au maximum de l'eau résiduelle qu'elle pourrait contenir, et l'on prépare au niveau dudit ROV le mélange final que l'on active éventuellement par chauffage, puis on l'injecte dans l'enveloppe de manière à la gonfler et ainsi créer l'isolation souhaitée autour dudit point singulier. Parmi les formulations de mélange décrites ci-après, on choisit de préférence des formulations capables de réticuler à basse température.

Le caractère innovant de la méthode de l'invention réside donc dans l'utilisation d'élastomères polysiloxanes comme agents gélifiants. Il s'agit alors de réticuler, en présence de la base liquide isolante, des polysiloxanes. L'utilisation de polysiloxane comme agent de gélification présente plusieurs avantages :
a) Le choix du polysiloxane est effectué en fonction de la base isolante à gélifier ce qui permet d'avoir une compatibilité maximale entre la base et le réseau gélifiant et donc une très bonne stabilité dans le temps.
   - Les polysiloxanes linéaires et les élastomères polysiloxanes sont très compatibles avec les hydrocarbures aliphatiques tels que les kérosènes ou les paraffines. Leurs coefficients de solubilité sont proches. Il en est de même pour nombre de composés apolaires. Ainsi, une grande compatibilité thermodynamique est obtenue entre le polysiloxane gélifiant et la base liquide hydrocarbure. Une concentration faible de gélifiant suffit et une stabilité à long terme est assurée.
   - Si la compatibilité avec la base isolante n'est pas optimale, on choisira un polysiloxane greffé pour avoir une compatibilité maximale entre la base et le réseau gélifiant et donc une très bonne stabilité dans le temps. Dans le cas d'une base isolante aromatique, on utilisera au contraire un polysiloxane comportant des motifs aromatiques (par exemple Si(C₆H₅)₂O ou SiCH₃R¹O avec R¹, un groupe contenant un motif aromatique).
b) En comparaison avec les polymères à squelette carboné, les polysiloxanes sont exceptionnellement stables en température. Leurs propriétés physiques ne varient que faiblement avec la température dans une gamme assez large : -150 °C à 150 °C, la dégradation des polysiloxanes ne commençant qu'à 350 °C.
c) Les polysiloxanes sont parfaitement biocompatibles car ils ne modifient en rien les métabolismes biologiques.
d) La réticulation peut se faire à température ambiante et jusqu'à 150 °C. Ceci permet une large gamme de température de mise en oeuvre des gels.
e) Le procédé met en jeu des huiles silicones de faible viscosité, diluées dans une base liquide isolante. Ceci facilite la mise en oeuvre.
f) La cinétique de réticulation dépend de la concentration en polymères dans la base liquide isolante, de la température et de la nature et de la concentration du catalyseur éventuellement utilisé. Elle peut varier de quelques heures à plusieurs jours pour les basses températures et faibles concentrations en polysiloxane. Ceci permet de disposer d'une large gamme de temps de gel en fonction du temps de mise en oeuvre souhaité.

L'invention concerne également le procédé de gélification chimique de bases liquides isolantes à changement de phase (PCM) ou non, pour former des gels chimiques réticulés stables dans une large gamme de température et de temps.

Le procédé selon l'invention permet de fabriquer un gel isolant à base de polysiloxane réticulée chimiquement, de faible conductivité thermique, à changement de phase ou non, et qui reste stable dans le temps et dans une large gamme de température.

Le procédé de fabrication consiste donc à gélifier une base liquide isolante à changement de phase ou non, à l'aide d'un agent gélifiant siliconé choisi pour augmenter suffisamment la viscosité de la base isolante, à changement de phase ou non, de manière à réduire, voire à supprimer, la convection thermique de la base isolante à l'état liquide.

Les propriétés d'isolation des gels obtenus par le procédé sont donc durables dans le temps en milieu aqueux et en température.

Les gels obtenus par le procédé sont faciles à mettre en oeuvre et la réaction peut être aisément contrôlée. Le temps de gel peut être adapté par un contrôle de la température de réaction et par la quantité de catalyseur. La réaction se produit sans départ de volatil, ce qui peut permettre une mise en oeuvre dans un milieu confiné, par exemple entre une conduite et une enveloppe extérieure ou au sein d'une enveloppe entourant un point singulier, tel qu'un coude, un té, une vanne ou un connecteur automatique.

Les exemples suivants illustrent l'invention sans la limiter. Les résines A et B utilisées dans ces exemples sont les composants A et B de la résine RTV 141® de Rhodia. Un catalyseur d'hydrosilylation est inclus dans la résine A. Dans l'Exemple 6, on a ajouté une quantité supplémentaire de Pt⁽⁰⁾divinyl-tétraméthyl-disiloxane.

### Exemple 1

On chauffe 90,2 g d'une paraffine C₁₈-C₂₀ à 80 °C, on ajoute 18 g de résine A, puis 1,8 g de résine B sous agitation. On agite le mélange jusqu'à ce qu'il soit homogène et on le maintient à la température de 80 °C. On dispose alors d'un temps avant gélification d'environ 1 heure, disponible pour la mise en place du gel dans le récipient ou la conduite. Une fois en place, le gel prend de façon irréversible dans le récipient ou la conduite avec un retrait négligeable. Le phénomène de restitution d'énergie apparaît au refroidissement lors du passage de la transition liquide-solide de la paraffine.

### Exemple 2

50,1 g d'un kérosène KETRUL 212® (comprenant 20 % d'aromatiques) sont mélangés à 4,5 g de résine A. Puis on ajoute 0,5 g de résine B. On agite le mélange jusqu'à ce qu'il soit homogène et on le maintient à la température de 80 °C. On dispose alors d'un temps avant gélification d'environ 1 heure, disponible pour la mise en place du gel dans le récipient ou la conduite. Une fois en place, le gel prend de façon irréversible dans le récipient ou la conduite avec un retrait négligeable.

### Exemple 3

46,74 g de paraffine (C₁₄-C₂₀) sont ajoutés à 8,96 g de résine A et 0,26 g d'octadéc-1-ène. Le mélange est agité, puis on ajoute 1,30 g de résine B. On agite le mélange jusqu'à ce qu'il soit homogène et on le maintient à la température de 60 °C. On dispose alors d'un temps avant gélification d'environ 24 heures, disponible pour la mise en place du gel dans le récipient ou la conduite. Une fois en place, le gel prend de façon irréversible dans le récipient ou la conduite avec un retrait négligeable. La température, (plus basse que pour l'Exemple 1), permet d'avoir une plage de temps plus importante pour la mise en place du matériau.. Le phénomène de restitution d'énergie apparaît au refroidissement lors du passage de la transition liquide-solide de la paraffine.

### Exemple 4

50,1 g d'un kérosène KETRUL 220® (non aromatique) sont mélangés à 4,5 g de résine A. Puis on ajoute 0,5 g de résine B. On agite le mélange jusqu'à ce qu'il soit homogène et on le maintient à la température de 80 °C. On dispose alors d'un temps avant gélification d'environ 1 heure, disponible pour la mise en place du gel dans le récipient ou la conduite. Une fois en place, le gel prend de façon irréversible dans le récipient ou la conduite avec un retrait négligeable. Les gels de kérosène des Exemples 1 et 4 ont le même aspect.

### Exemple 5

82,0 g de paraffine (C₁₈-C₂₀) sont ajoutés à 11,51 g de résine A et 4,61 g d'octadéc-1-ène. Le mélange est agité, puis on ajoute 1,15 g de résine B et 0,74 g d'un PHMS (polyhydrogénométhylsiloxane). On agite le mélange jusqu'à ce qu'il soit homogène et on le maintient à la température de 80 °C. On dispose alors d'un temps avant gélification d'environ ¼ d'heure, disponible pour la mise en place du gel dans le récipient ou la conduite. Une fois en place, le gel prend de façon irréversible dans le récipient ou la conduite avec un retrait négligeable. Le phénomène de restitution d'énergie apparaît au refroidissement lors du passage de la transition liquide-solide de la paraffine.

### Exemple 6

82,0 g de paraffine (C₁₈-C₂₀) sont ajoutés à 15,45 g de résine A et 0,77 g d'octadéc-1-ène. Le mélange est agité, puis on ajoute 1,55 g de résine B et 0,23 g d'un PHMS (polyhydrogénométhylsiloxane) et 20 µL d'une solution catalytique d'un complexe Pt⁽⁰⁾divinyl-tétraméthyl-disiloxane à 2,1-2,4% dans le xylène. On agite le mélange jusqu'à ce qu'il soit homogène et on le maintient à la température de 60 °C. On dispose alors d'un temps avant gélification d'environ 16 heures, disponible pour la mise en place du gel dans le récipient ou la conduite. Une fois en place, le gel prend de façon irréversible dans le récipient ou la conduite avec un retrait négligeable. Le phénomène de restitution d'énergie apparaît au refroidissement lors du passage de la transition liquide-solide de la paraffine. Le temps disponible pour la mise en place du matériau est supérieur à celui de l'Exemple 5.

### Exemple 7

85,0 g d'un kérosène KETRUL 212® (comprenant 20% d'aromatiques) sont ajoutés à 12,69 g de résine A et 0,63 g d'allylbenzène. Le mélange est agité, puis on ajoute 1,27 g de résine B et 0,41 g d'un PHMS (polyhydrogénométhylsiloxane). On agite le mélange jusqu'à ce qu'il soit homogène et on le maintient à la température de 70 °C. On dispose alors d'un temps avant gélification d'environ 6 heures, disponible pour la mise en place du gel dans le récipient ou la conduite. Une fois en place, le gel prend de façon irréversible dans le récipient ou la conduite avec un retrait négligeable.

### Exemple 8

82,0 g de paraffine (C₁₈-C₂₀) sont ajoutés à 11,51 g de résine A et 4,61 g d'octadéc-1-ène. Le mélange est agité, puis on ajoute 1,15 g de résine B et 0,74 g d'un PHMS (polyhydrogénométhylsiloxane) et 20 µL d'un catalyseur H₂PtCl₆,6H₂O en solution à 0,5 M dans le THF (tétrahydrofuranne). On agite le mélange jusqu'à ce qu'il soit homogène et on le maintient à la température de 70 °C. On dispose alors d'un temps avant gélification d'environ 6 heures, disponible pour la mise en place du gel dans le récipient ou la conduite. Une fois en place, le gel prend de façon irréversible dans le récipient ou la conduite avec un retrait négligeable. Le phénomène de restitution d'énergie apparaît au refroidissement lors du passage de la transition liquide-solide de la paraffine. Le temps disponible pour la mise en place du matériau est intermédiaire entre celui de l'Exemple 5 et celui de l'Exemple 6.

## Revendications

1. Méthode d'isolation thermique **caractérisée en ce qu'**elle comprend :
- la mise en place d'un mélange formé entre une base liquide isolante, à changement de phase ou non, et au moins un agent gélifiant comprenant au moins une résine polysiloxane, modifiée ou non, et
- la réticulation *in situ* de ladite résine polysiloxane.

2. Méthode selon la revendication 1 **caractérisée en ce que** ladite base liquide isolante est choisie parmi :
- les hydrocarbures aliphatiques, cycliques ou non, insaturés ou non ;
- les hydrocarbures aromatiques ;
- les mélanges de fractions aliphatiques et aromatiques ;
- les alcools aliphatiques et aromatiques ;
- les acides gras, les huiles végétales et les huiles animales ; et
- les composés halogénés.

3. Méthode selon la revendication 1 ou 2 **caractérisée en ce que** ladite base liquide isolante est à changement de phase.

4. Méthode selon la revendication 3 **caractérisée en ce que** ladite base liquide isolante est une coupe paraffinique de C₁₂ à C₆₀.

5. Méthode selon la revendication 4 **caractérisée en ce que** ladite base liquide isolante est choisie parmi les cires de n-paraffines à chaîne longue de C₃₀ à C₄₀ et les cires d'isoparaffines à chaîne longue de C₃₀ à C₄₀ et à 1 ou 2 ramifications,

6. Méthode selon la revendication 3 **caractérisée en ce que** ladite base liquide isolante est choisie parmi les alkylcycloalcanes et les alkylaromatiques à chaîne alkyle faiblement ramifiée, les alcools gras et les acides gras.

7. Méthode selon la revendication 1 ou 2 **caractérisée en ce que** ladite base liquide isolante est un kérosène.

8. Méthode selon la revendication 1 à 7 **caractérisée en ce que** ladite résine polysiloxane est choisie parmi :
- les monomères comprenant un motif de formule (I) et terminés par deux motifs de formule (II) ;
- les oligomères comprenant des motifs unitaires de formule (I) et terminés par des motifs de formule (II) ;
- les polymères comprenant des motifs unitaires de formule (I) et terminés par des motifs de formule (II) ;
- les oligomères cycliques comprenant des motifs unitaires de formule (I) ;
- et les polymères cycliques comprenant des motifs unitaires de formule (I),
les formules (I) et (II) étant représentées ci-dessous : 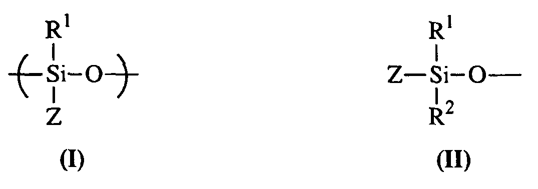 dans lesquelles :
- les symboles R¹ et R², semblables ou différents, représentent chacun :
■ un radical alkyle linéaire ou ramifié contenant moins de 30 atomes de carbone, éventuellement substitué par au moins un halogène ;
■ un radical cycloalkyle, contenant de 5 à 8 atomes de carbone dans le cycle, éventuellement substitué ;
■ un radical aryle contenant entre 6 et 12 atomes de carbone, éventuellement substitué ; ou
■ toute autre chaîne alkylaromatique ;
- les symboles Z, semblables ou différents, représentent chacun :
■ un groupement R¹ et/ou R² ;
■ un radical hydrogène ;
■ un radical hydroxyle ;
■ un radical vinyle (-CH=CH₂) ; ou
■ une chaîne carbonée aliphatique ou cyclique, saturée ou insaturée comportant ou non des insaturations, comportant ou non un ou plusieurs hétéroatomes, comportant ou non des groupements chimiques réactifs ;
avec l'un au moins des symboles Z représentant un groupement réticulable, selon l'un des modes de réticulation envisagés ci-dessous.

9. Méthode selon l'une des revendications 1 à 8 **caractérisée en ce que** ladite base liquide isolante représente de 70 % à 99,5 % et ledit agent gélifiant de 30 % à 0,5 % de la masse totale du mélange.

10. Méthode selon l'une des revendications 1 à 9 **caractérisée en ce que** le mélange comprend en outre un agent compatibilisant entre ladite base liquide isolante et ledit polysiloxane dont la proportion est prise en compte sur la proportion de l'agent gélifiant.

11. Méthode selon l'une des revendications 1 à 10 **caractérisée en ce que** l'agent gélifiant comprend au moins un polyorganosiloxane terminé par des fonctions hydroxyles et au moins un silane comportant des fonctions alkoxy ou des groupes carboxylates et la réticulation est réalisée en présence d'un catalyseur acide, basique ou à base d'étain ou de titane et en présence de traces d'eau, servant de co-catalyseur.

12. Méthode selon l'une des revendications 1 à 10 **caractérisée en ce que** l'agent gélifiant comprend deux résines polysiloxanes fonctionnalisées :
- une résine A contenant des fonctions vinylsilane (Si-CH=CH₂) éventuellement greffées ;
- et une résine B contenant des fonctions hydrogénosilane (Si-H)
et **en ce que** la réticulation est réalisée par hydrosilylation.

13. Méthode selon la revendication 12 **caractérisée en ce que** les proportions de résines A et B engagées sont telles que le rapport molaire entre les groupes hydrogénosilane provenant de la résine B et les groupes vinylsilane provenant de la résine A est de 0,8 à 1,4.

14. Méthode selon l'une des revendications 12 et 13 **caractérisée en ce que** le mélange comprend un catalyseur d'hydrosilylation.

15. Méthode selon l'une des revendications 12 à 14 **caractérisée en ce que** ladite base liquide isolante représente de 50 % à 99,5 % et ledit agent gélifiant de 0,5 % à 50 % de la masse totale du mélange.

16. Méthode selon la revendication 15 **caractérisée en ce que** ladite base liquide isolante représente de 70 % à 98 % et ledit agent gélifiant de 2 % à 30 % de la masse totale du mélange.

17. Méthode selon l'une des revendications 12 à 16 **caractérisée en ce que** le mélange comprend en outre un agent compatibilisant entre ladite base liquide isolante et ledit polysiloxane dont la proportion est prise en compte dans la proportion de l'agent gélifiant.

18. Méthode selon l'une des revendications 12 à 17 **caractérisée en ce que** ladite base liquide isolante est une coupe paraffinique de C₁₂ à C₆₀, la proportion d'agent gélifiant, qui inclut celle de l'agent compatibilisant, est de 7 % à 30 % en masse, dans laquelle l'agent compatibilisant représente une proportion de 10 % à 40 % en masse.

19. Méthode selon la revendication 18 **caractérisée en ce que** ladite base liquide isolante est une coupe paraffinique de C₁₄ à C₂₀ et l'agent compatibilisant est l'octadéc-1-ène.

20. Méthode selon l'une des revendications 12 à 17 **caractérisée en ce que** ladite base liquide isolante est un kérosène et **en ce que** l'agent gélifiant représente de 5 % à 30 % en masse du mélange.

21. Méthode selon l'une des revendications 1 à 20 **caractérisée en ce que** le temps de mise en place dudit mélange est réglé par la température, la nature et la proportion de la résine dans ledit mélange et par la nature et la concentration du catalyseur éventuel dans ledit mélange.

22. Méthode selon l'une des revendications 1 à 21 **caractérisée en ce que** le mélange comprend en outre au moins un additif choisi parmi les additifs antioxydants, les agents antibactériens, les inhibiteurs de corrosion, les agents anti-mousse et les colorants, solubles dans la base isolante liquide.

23. Méthode selon l'une des revendications 1 à 22 **caractérisée en ce que** le mélange comprend en outre au moins une charge choisie parmi les microbilles de verres creuses, les cendres volantes, les macrobilles et les fibres creuses.

24. Méthode selon l'une des revendications 1 à 23 **caractérisée en ce que** l'on isole une conduite ou un pipeline ou un point singulier sur une conduite ou un pipeline.

25. Méthode selon la revendication 24 **caractérisée en ce que** l'on isole un pipeline en ultra-grand fond pour des températures variant de 2 °C à 200 °C.

26. Méthode selon la revendication 24 ou 25 **caractérisée en ce que** le mélange est appliqué comme revêtement sur la conduite à isoler thermiquement.

27. Méthode selon la revendication 24 ou 25 **caractérisée en ce que** le mélange est interposé entre la conduite et une enveloppe extérieure de protection.

28. Méthode selon la revendication 24 ou 25 **caractérisée en ce que** ledit point singulier consiste en un coude, un té, une vanne ou un connecteur automatique.

29. Méthode selon la revendication 28 **caractérisée en ce que** l'on intervient au fond de la mer pour installer autour dudit point singulier ; on crée un vide dans ladite enveloppe de manière à la purger au maximum de l'eau qu'elle pourrait contenir ; on injecte le mélange dans l'enveloppe de manière à la gonfler et ainsi créer l'isolation souhaitée autour dudit point singulier.

30. Conduite ou pipeline isolé thermiquement par une méthode selon l'une des revendications 23 à29.

31. Formulation réticulable utilisable dans une méthode selon l'une des revendications 1 à 29 **caractérisée en ce qu'**elle comprend le mélange d'une base liquide isolante, à changement de phase ou non, et d'au moins un agent gélifiant comprenant au moins un polysiloxane, modifié ou non.

32. Formulation de gel isolant selon la revendication 31 **caractérisé en ce que** le mélange comprend en outre un agent compatibilisant entre ladite base liquide isolante et ledit polysiloxane.

33. Formulation de gel isolant selon la revendication 31 ou 32 **caractérisé en ce que** l'agent gélifiant comprend deux résines polysiloxanes fonctionnalisées :
- une résine A contenant des fonctions vinylsilane (Si-CH=CH₂) éventuellement greffées ;
- et une résine B contenant des fonctions hydrogénosilane (Si-H)

34. Procédé de fabrication d'un gel isolant à partir d'une formulation selon l'une des revendications 31 à 33 **caractérisé en ce que** l'on soumet ladite formulation à des conditions de réticulation.

35. Procédé selon la revendication 34 **caractérisé en ce que**, dans l'étape (a), on met en jeu un agent compatibilisant entre ladite base liquide isolante et ledit polysiloxane.

36. Procédé selon la revendication 34 ou 35 **caractérisé en ce que** l'agent gélifiant comprend deux résines polysiloxanes fonctionnalisées :
- une résine A contenant des fonctions vinylsilane (Si-CH=CH₂) éventuellement greffées ;
- et une résine B contenant des fonctions hydrogénosilane (Si-H)
et **en ce que** la réticulation est réalisée par hydrosilylation.

37. Gel isolant **caractérisé en ce qu'**il est formé d'une base isolante liquide et d'au moins une résine polysiloxane réticulée.

38. Gel isolant **caractérisé en ce qu'**il est obtenu par un procédé selon l'une des revendications 34 à 36.

39. Conduite ou pipeline isolé thermiquement au moyen d'un gel selon la revendication 37 ou 38.

40. Conduite ou pipeline selon la revendication 39 **caractérisé en ce que** ledit gel est appliqué comme revêtement sur la conduite à isoler thermiquement.

41. Conduite ou pipeline selon la revendication 39 **caractérisé en ce que** ledit gel est interposé entre la conduite et une enveloppe extérieure de protection.

## Claims

1. A method for thermal insulation, **characterized in that** it comprises:
• positioning a gel formed between an insulating liquid base, which may or may not be a phase change material, and at least one gelling agent comprising at least one polysiloxane resin, which may or may not be modified, and
• in situ cross linking of said polysiloxane resin.

2. A method according to claim 1, **characterized in that** said insulating liquid base is selected from:
• saturated or unsaturated, cyclic or non-cyclic aliphatic hydrocarbon bases;
• aromatic hydrocarbon bases;
• mixtures of aliphatic and aromatic fractions;
• aliphatic and aromatic alcohols;
• fatty acids, vegetable oils and animal oils; and
• halogenated compounds.

3. A method according to claim 1 or claim 2, **characterized in that** said insulating liquid base is a phase change material.

4. A method according to claim 3, **characterized in that** said insulating liquid base is a C₁₂ to C₆₀ paraffinic cut.

5. A method according to claim 4, **characterized in that** said insulating liquid base is selected from long chain C₃₀ to C₄₀ n-paraffin waxes and long chain C₃₀ to C₄₀ isoparaffin waxes containing 1 or 2 branches.

6. A method according to claim 3, **characterized in that** said insulating liquid base is selected from slightly branched alkyl chain alkylaromatics or alkylcycloalkanes, fatty alcohols and fatty acids.

7. A method according to claim 1 or claim 2, **characterized in that** said insulating liquid base is a kerosene.

8. A method according to claims 1 to 7, **characterized in that** said polysiloxane resin is selected from:
• monomers containing a motif with formula (I) terminated by two motifs with formula (II);
• oligomers with unitary motifs with formula (I) terminated by motifs with formula (II);
• polymers comprising unitary motifs with formula (I) terminated by motifs with formula (II);
• cyclic oligomers comprising unitary motifs with formula (I); and
• cyclic polymers comprising unitary motifs with formula (I);
formulae (I) and (II) being shown below: 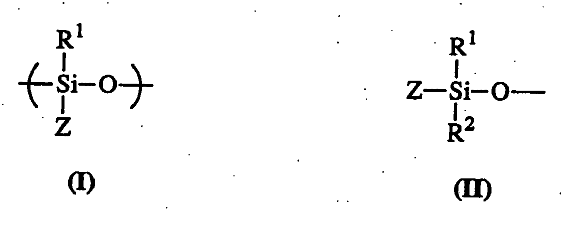 in which formulae:
• symbols R¹ and R², which are identical or different, each represent:
o a linear or branched alkyl radical containing less than 30 carbon atoms, optionally substituted with at least one halogen;
o a cycloalkyl radical containing 5 to 8 carbon atoms in the cycle, optionally substituted;
o an aryl radical containing 6 to 12 carbon atoms, which may be substituted; or
o any other alkylaromatic chain;
• symbols Z, which are identical or different, each represent:
o a group R¹ and/or R²;
o a hydrogen radical;
o a hydroxyl radical; o a vinyl radical (-CH=CH₂); or
o a saturated or unsaturated, aliphatic or cyclic carbonaceous chain, which may or may not contain unsaturated bonds, which may or may not contain heteroatoms, which may or may not contain reactive chemical groups;
with at least one of symbols Z representing a cross-linkable group, using one of the cross-linking modes defined below.

9. A method according to one of claims 1 to 8, **characterized in that** said insulating liquid base represents 70% to 99.5% and said gelling agent represents 30% to 0.5% of the total weight of the mixture.

10. A method according to one of claims 1 to 9, **characterized in that** the mixture further comprises a compatiblizing agent between said insulating liquid base and said polysiloxane, the proportion of which is included in the proportion of gelling agent.

11. A method according to one of claims 1 to 10, **characterized in that** the gelling agent comprises at least one polyorganosiloxane terminated by hydroxyl functions and at least one silane containing alkoxy functions or carboxylate groups and cross-linking is carried out in the presence of an acid catalyst, a basic catalyst or a catalyst based on tin or titanium in the presence of traces of water acting as a cocatalyst.

12. A method according to one of claims 1 to 10, **characterized in that** the gelling agent comprises two functionalized polysiloxanes:
• a resin A containing vinylsilane functions (Si-CH=CH₂) which may be grafted;
• and a resin B containing hydrosilane functions (Si-H);
and **in that** cross-linking is carried out by hydrosilylation.

13. A method according to claim 12, **characterized in that** the proportions of resins A and B are such that the mole ratio between the hydrosilane groups from resin B and the vinylsilane groups from resin A is 0.8 to 1.4.

14. A method according to claim 12 or claim 13, **characterized in that** the mixture comprises a hydrosilylation catalyst.

15. A method according to one of claims 12 to 14, **characterized in that** said insulating liquid base generally represents 50% to 99.5% of the total mixture weight and the gelling agent represents 0.5% to 50%.

16. A method according to claim 15, **characterized in that** said insulating liquid base represents 70% to 98% and said gelling agent represents 2% to 30% of the total mass of the mixture.

17. A method according to one of claims 12 to 16, **characterized in that** the mixture further comprises a compatibilizing agent between said insulating liquid base and said polysiloxane, the proportion of which is included in the proportion of gelling agent.

18. A method according to one of claims 12 to 17, **characterized in that** said insulating liquid base is a C₁₂ to C₆₀ paraffinic cut, the proportion of gelling agent, which includes that of the compatibilizing agent, is 7% to 30% by weight, in which the compatibilizing agent represents a proportion of 10% to 40% by weight.

19. A method according to claim 18, **characterized in that** said insulating liquid base is a C₁₄ to C₂₀ paraffinic cut and the compatibilizing agent is octadec-1-ene.

20. A method according to one of claims 12 to 17, **characterized in that** said insulating liquid base is a kerosene and **in that** the gelling agent represents 5% to 30% by weight of the mixture.

21. A method according to one of claims 1 to 20, **characterized in that** the positioning time for said mixture is regulated by the temperature, the nature and the proportion of resin in said mixture and by the nature and concentration of any catalyst in said mixture.

22. A method according to one of claims 1 to 21, **characterized in that** the mixture further comprises at least one additive selected from antioxidant additives, antibacterial agents, corrosion inhibitors, anti-foaming agents and colorants, which are soluble in the insulating liquid base.

23. A method according to one of claims 1 to 22, **characterized in that** the mixture further comprises at least one filler selected from hollow glass microbeads, fly ash, macrobeads and hollow fibres.

24. A method according to one of claims 1 to 23, **characterized in that** a flowline or a pipeline or a singularity on a flowline or pipeline is insulated.

25. A method according to claim 24, **characterized in that** an ultradeep pipeline is insulated for temperatures of 2°C to 200°C.

26. A method according to claim 24 or claim 25, **characterized in that** the mixture is applied as a coating to the flowline to be thermally insulated.

27. A method according to claim 24 or claim 25, **characterized in that** the mixture is interposed between the flowline and a protective external jacket.

28. A method according to claim 24 or claim 25, **characterized in that** said singularity consists of a bend, a tee, a valve or an automatic connector.

29. A method according to claim 28, **characterized in that** the singularity is on a flowline already in place on the seabed; a vacuum is created in said jacket to purge as much water as possible that it may contain; the mixture is injected into the jacket to inflate it and to create the desired insulation around said singularity.

30. A flowline or pipeline thermally insulated by a method according to one of claims 23 to 29.

31. A cross-linkable formulation for use in a method according to one of claims 1 to 29, **characterized in that** it comprises a mixture of an insulating liquid base, which may or may not be a phase change material, and at least one gelling agent comprising at least one polysiloxane, which may or may not be modified.

32. An insulating gel formulation according to claim 31, **characterized in that** the mixture further comprises a compatibilizing agent between said insulating liquid base and said polysiloxane.

33. An insulating gel formulation according to claim 31 or claim 32, **characterized in that** the gelling agent comprises two functionalized polysiloxane resins:
• a resin A containing vinylsilane functions (Si-CH=CH₂) which may be grafted;
• and a resin B containing hydrosilane functions (Si-H).

34. A process for producing an insulating gel from a formulation according to one of claims 31 to 33, **characterized in that** said formulation is subjected to cross-linking conditions.

35. A process according to claim 34, **characterized in that** in step a), a compatibilizing agent acting between said insulating liquid base and said polysiloxane is employed.

36. A process according to claim 34 or claim 35, **characterized in that** the gelling agent comprises two functionalized polysiloxanes:
• a resin A containing vinylsilane functions (Si-CH=CH₂) which may be grafted;
• and a resin B containing hydrosilane functions (Si-H);
and **in that** cross-linking is carried out by hydrosilylation.

37. An insulating gel, **characterized in that** it is formed from an insulating liquid base and at least one cross-linked polysiloxane resin.

38. An insulating gel, **characterized in that** it is obtained by a process according to one of claims 34 to 36.

39. A flowline or pipeline thermally insulated using a gel according to claim 37 or claim 38.

40. A flowline or pipeline according to claim 39, **characterized in that** said gel is applied to the flowline to be thermally insulated as a coating.

41. A flowline or pipeline according to claim 39, **characterized in that** said gel is interposed between the flowline and a protective external jacket.

## Patentansprüche

1. Verfahren zur thermischen Isolation, **dadurch gekennzeichnet, dass** es umfasst:
- das Anordnen eines Gemischs, gebildet zwischen einer isolierenden flüssigen Basis, aus Phasenübergangsmaterial oder nicht, und mindestens einem Gelatinierungsmittel, das mindestens ein Polysiloxanharz, modifiziert oder nicht, umfasst, und
- die *In*-*situ*-Vernetzung des Polysiloxanharzes.

2. Verfahren nach Anspruch 1, **dadurch gekennzeichnet, dass** die isolierende flüssige Basis ausgewählt ist aus:
- den aliphatischen Kohlenwasserstoffen, cyclisch oder nicht, ungesättigt oder nicht;
- den aromatischen Kohlenwasserstoffen;
- den Gemischen aus aliphatischen und aromatischen Fraktionen;
- den aliphatischen und aromatischen Alkoholen;
- den Fettsäuren, den Pflanzenölen und den Tierölen; und
- den halogenierten Verbindungen.

3. Verfahren nach Anspruch 1 oder 2, **dadurch gekennzeichnet, dass** die isolierende flüssige Basis aus Phasenübergangsmaterial ist.

4. Verfahren nach Anspruch 3, **dadurch gekennzeichnet, dass** die isolierende flüssige Basis ein C₁₂-C₆₀-Paraffinschnitt ist.

5. Verfahren nach Anspruch 4, **dadurch gekennzeichnet, dass** die isolierende flüssige Basis ausgewählt ist aus den langkettigen C₃₀-C₄₀-n-Paraffinwachsen und den langkettigen C₃₀-C₄₀-Isoparaffinwachsen mit und 1 oder 2 Verzweigungen.

6. Verfahren nach Anspruch 3, **dadurch gekennzeichnet, dass** die isolierende flüssige Basis ausgewählt ist aus den Alkylcycloalkanen und den alkylaromatischen Verbindungen mit weniger verzweigter Alkylkette, den Fettalkoholen und den Fettsäuren.

7. Verfahren nach Anspruch 1 oder 2, **dadurch gekennzeichnet, dass** die isolierende flüssige Basis ein Kerosin ist.

8. Verfahren nach Anspruch 1 bis 7, **dadurch gekennzeichnet, dass** das Polysiloxanharz ausgewählt ist aus:
- den Monomeren, die eine Struktur der Formel (I) umfassen und mit zwei Strukturen der Formel (II) beendet werden;
- den Oligomeren, die Struktureinheiten der Formel (I) umfassen und mit Strukturen der Formel (II) beendet werden;
- den Polymeren, die Struktureinheiten der Formel (I) umfassen und mit Strukturen der Formel (II) beendet werden;
- den cyclischen Oligomeren, die Struktureinheiten der Formel (I) umfassen;
- und den cyclischen Polymeren, die Struktureinheiten der Formel (I) umfassen, wobei die Formeln (I) und (II) nachfolgend dargestellt sind: 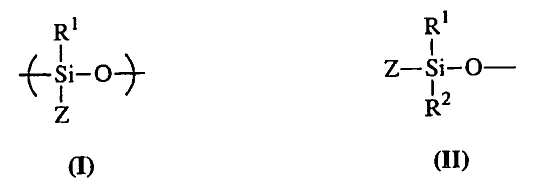 worin:
- die Symbole R¹ und R², gleich oder verschieden, jeweils darstellen:
■ einen linearen oder verzweigten Alkylrest, der weniger als 30 Kohlenstoffatome enthält, der gegebenenfalls durch mindestens ein Halogen substituiert ist;
■ einen Cycloalkylrest, der 5 bis 8 Kohlenstoffatome im Ring enthält, gegebenenfalls substituiert;
■ einen Arylrest, der zwischen 6 und 12 Kohlenstoffatome enthält, gegebenenfalls substituiert; oder
■ jede andere alkylaromatische Kette;
- die Symbole Z, gleich oder verschieden, jeweils darstellen:
■ eine R¹- und/oder R²-Gruppe;
■ einen Wasserstoffrest;
■ einen Hydroxylrest;
■ einen Vinylrest (-CH=CH₂); oder
■ eine aliphatische oder cyclische, gesättigte oder ungesättigte Kohlenwasserstoffkette, die Ungesättigtheiten umfasst oder nicht, die ein oder mehrere Heteroatome umfasst oder nicht, die reaktive chemische Gruppen umfasst oder nicht;
wobei mindestens eines der Symbole Z eine Gruppe darstellt, die gemäß einer der nachfolgend definierten Vernetzungsarten vernetzbar ist.

9. Verfahren nach einem der Ansprüche 1 bis 8, **dadurch gekennzeichnet, dass** die isolierende flüssige Basis 70 % bis 99,5 % und das Gelatinierungsmittel 30 % bis 0,5 % der Gesamtmasse des Gemischs darstellt.

10. Verfahren nach einem der Ansprüche 1 bis 9, **dadurch gekennzeichnet, dass** das Gemisch ferner ein Kompatibilisierungsmittel zwischen der isolierenden flüssigen Basis und dem Polysiloxan umfasst, dessen Anteil im Anteil des Gelatinierungsmittel enthalten ist.

11. Verfahren nach einem der Ansprüche 1 bis 10, **dadurch gekennzeichnet, dass** das Gelatinierungsmittel mindestens ein Polyorganosiloxan, das durch Hydroxylfunktionen beendet wird, und mindestens ein Silan umfasst, das Alkoxyfunktionen oder Carboxylatgruppen umfasst, und die Vernetzung in Gegenwart eines sauren Katalysators, basischen Katalysators oder eines Katalysators auf der Basis von Zinn oder Titan und in Gegenwart von Spuren von Wasser, die als Hilfskatalysator dienen, ausgeführt wird.

12. Verfahren nach einem der Ansprüche 1 bis 10, **dadurch gekennzeichnet, dass** das Gelatinierungsmittel zwei funktionalisierte Polysiloxanharze umfasst:
- ein Harz A, das gegebenenfalls gepfropfte Vinylsilanfunktionen (Si-CH=CH₂) enthält;
- und ein Harz B, das Hydrogensilanfunktionen (Si-H) enthält, und dadurch, dass die Vernetzung durch Hydrosilylierung ausgeführt wird.

13. Verfahren nach Anspruch 12, **dadurch gekennzeichnet, dass** die Anteile an den eingesetzten Harzen A und B derart sind, dass das Molverhältnis zwischen den Hydrogensilangruppen, die aus dem Harz B stammen und der Vinylsilangruppen, die aus dem Harz A stammen, 0,8 bis 1,4 beträgt.

14. Verfahren nach einem der Ansprüche 12 und 13, **dadurch gekennzeichnet, dass** das Gemisch einen Hydrosilylierungskatalysator umfasst.

15. Verfahren nach einem der Ansprüche 12 bis 14, **dadurch gekennzeichnet, dass** die isolierende flüssige Basis 50 % bis 99,5 % und das Gelatinierungsmittel 0,5 % bis 50 % der Gesamtmasse des Gemischs darstellt.

16. Verfahren nach Anspruch 15, **dadurch gekennzeichnet, dass** die isolierende flüssige Basis 70 % bis 98 % und das Gelatinierungsmittel 2 % bis 30 % der Gesamtmasse des Gemischs darstellt.

17. Verfahren nach einem der Ansprüche 12 bis 16, **dadurch gekennzeichnet, dass** das Gemisch ferner ein Kompatibilisierungsmittel zwischen der isolierenden flüssigen Basis und dem Polysiloxan umfasst, dessen Anteil im Anteil des Gelatinierungsmittel enthalten ist.

18. Verfahren nach einem der Ansprüche 12 bis 17, **dadurch gekennzeichnet, dass** die isolierende flüssige Basis ein C₁₂-C₆₀-Paraffinschnitt ist, wobei der Anteil an Gelatinierungsmittel, in dem der Anteil an Kompatibilisierungsmittel enthalten ist, 7 Masse-% bis 30 Masse-% beträgt, worin das Kompatibilisierungsmittel einen Anteil von 10 Masse-% bis 40 Masse-% darstellt.

19. Verfahren nach Anspruch 18, **dadurch gekennzeichnet, dass** die isolierende flüssige Basis ein C₁₄-C₂₀-Paraffinschnitt ist und das Kompatibilisierungsmittel Octadec-1-en ist.

20. Verfahren nach einem der Ansprüche 12 bis 17, **dadurch gekennzeichnet, dass** die isolierende flüssige Basis ein Kerosin ist und dadurch, dass das Gelatinierungsmittel 5 Masse-% bis 30 Masse-% des Gemischs darstellt.

21. Verfahren nach einem der Ansprüche 1 bis 20, **dadurch gekennzeichnet, dass** die Anordnungsdauer des Gemischs durch die Temperatur, die Natur und den Anteil des Harzes in dem Gemisch und durch die Natur und die Konzentration des gegebenenfalls vorhandenen Katalysators in dem Gemisch geregelt wird.

22. Verfahren nach einem der Ansprüche 1 bis 21, **dadurch gekennzeichnet, dass** das Gemisch ferner mindestens ein Additiv umfasst, das ausgewählt ist aus den Antioxidationsadditiven, den antibakteriellen Mitteln, den Korrosionsschutzmitteln, den Antischaummitteln und den Farbstoffen, die in der flüssigen isolierenden Basis löslich sind.

23. Verfahren nach einem der Ansprüche 1 bis 22, **dadurch gekennzeichnet, dass** das Gemisch ferner mindestens einen Füllstoff umfasst, der ausgewählt ist aus den Hohlglasmikrokügelchen, den Flugaschen, den Makrokügelchen und den Hohlfasern.

24. Verfahren nach einem der Ansprüche 1 bis 23, **dadurch gekennzeichnet, dass** eine Leitung oder eine Pipeline oder eine singuläre Stelle auf einer Leitung oder einer Pipeline isoliert wird.

25. Verfahren nach Anspruch 24, **dadurch gekennzeichnet, dass** eine Pipeline in sehr tiefen Gewässern für Temperaturen isoliert wird, die von 2°C bis 200°C schwanken.

26. Verfahren nach Anspruch 24 oder 25, **dadurch gekennzeichnet, dass** das Gemisch als Beschichtung auf der thermisch zu isolierenden Leitung aufgebracht wird.

27. Verfahren nach Anspruch 24 oder 25, **dadurch gekennzeichnet, dass** das Gemisch zwischen der Leitung und einem äußeren Schutzmantel positioniert wird.

28. Verfahren nach Anspruch 24 oder 25, **dadurch gekennzeichnet, dass** die singuläre Stelle aus einer Biegung, einem T-Stück, einem Ventil oder einem automatischen Verbindungsstück besteht.

29. Verfahren nach Anspruch 28, **dadurch gekennzeichnet, dass** zur Installation um die singuläre Stelle herum am Meeresgrund interveniert wird; es wird ein Vakuum in dem Mantel erzeugt, um eine maximale Menge des möglicherweise enthaltenen Wassers auszuspülen; das Gemisch wird in den Mantel injiziert, um ihn aufzublähen und so die gewünschte Isolation um die einzelne Stelle herum zu erzeugen.

30. Leitung oder Pipeline, die durch ein Verfahren nach einem der Ansprüche 23 bis 29 thermisch isoliert ist.

31. Vernetzbare Formulierung, die in einem Verfahren nach einem der Ansprüche 1 bis 29 verwendbar ist, **dadurch gekennzeichnet, dass** sie das Gemisch aus einer isolierenden flüssigen Basis, aus Phasenübergangsmaterial oder nicht, und mindestens einem Gelatinierungsmittel umfasst, das mindestens ein Polysiloxan, modifiziert oder nicht, umfasst.

32. Isolationsgelformulierung nach Anspruch 31, **dadurch gekennzeichnet, dass** das Gemisch ferner ein Kompatibilisierungsmittel zwischen der isolierenden flüssigen Basis und dem Polysiloxan umfasst.

33. Isolationsgelformulierung nach Anspruch 31 oder 32, **dadurch gekennzeichnet, dass** das Gelatinierungsmittel zwei funktionalisierte Polysiloxanharze umfasst:
- ein Harz A, das gegebenenfalls gepfropfte Vinylsilanfunktionen (Si-CH=CH₂) enthält;
- und ein Harz B, das Hydrogensilanfunktionen (Si-H) umfasst.

34. Verfahren zur Herstellung eines Isolationsgels ausgehend von einer Formulierung nach einem der Ansprüche 31 bis 33, **dadurch gekennzeichnet, dass** die Formulierung Vernetzungsbedingungen unterzogen wird.

35. Verfahren nach Anspruch 34, **dadurch gekennzeichnet, dass** in Schritt
(a) ein Kompatibilisierungsmittel zwischen der isolierenden flüssigen Basis und dem Polysiloxan eingesetzt wird.

36. Verfahren nach Anspruch 34 oder 35, **dadurch gekennzeichnet, dass** das Gelatinierungsmittel zwei funktionalisierte Polysiloxanharze umfasst:
- ein Harz A, das gegebenenfalls gepfropfte Vinylsilanfunktionen (Si-CH=CH₂) enthält;
- und ein Harz B, das Hydrogensilanfunktionen (Si-H) enthält, und dadurch, dass die Vernetzung durch Hydrosilylierung ausgeführt wird.

37. Isolationsgel, **dadurch gekennzeichnet, dass** es aus einer flüssigen isolierenden Basis und mindestens einem vernetzten Polysiloxanharz gebildet wird.

38. Isolationsgel, **dadurch gekennzeichnet, dass** es durch ein Verfahren nach einem der Ansprüche 34 bis 36 erhalten wird.

39. Leitung oder Pipeline, die mittels eines Gels nach Anspruch 37 oder 38 thermisch isoliert ist.

40. Leitung oder Pipeline nach Anspruch 39, **dadurch gekennzeichnet, dass** das Gel als Beschichtung auf der thermisch zu isolierenden Leitung aufgebracht wird.

41. Leitung oder Pipeline 39, **dadurch gekennzeichnet, dass** das Gel zwischen der Leitung und einem äußeren Schutzmantel positioniert wird.
